(19) Europäisches Patentamt / European Patent Office / Office européen des brevets

(11) **EP 4 141 807 B1**

(12) **EUROPEAN PATENT SPECIFICATION**

(45) Date of publication and mention
of the grant of the patent:
**15.04.2026   Bulletin 2026/16**

(21) Application number: **21192509.4**

(22) Date of filing: **23.08.2021**

(51) International Patent Classification (IPC):
**G06V 10/82** (2022.01)          **G01S 15/00** (2020.01)
**G06V 20/58** (2022.01)          **G08G 1/00** (2006.01)
**G06N 3/00** (2023.01)          **G06N 20/20** (2019.01)
**G06N 3/0455** (2023.01)          **G06N 3/047** (2023.01)
**G06N 3/094** (2023.01)          **G06V 10/70** (2022.01)
**G06N 3/0475** (2023.01)

(52) Cooperative Patent Classification (CPC):
**G06V 20/586; G06N 3/0455; G06N 3/047;**
**G06N 3/0475; G06N 3/094; G06V 10/82;**
**G06V 10/87;** G01S 15/006; G06N 3/0464;
G06N 20/20

(54) **METHOD AND DEVICE FOR GENERATING SYNTHETIC TRAINING DATA FOR AN ULTRASONIC SENSOR MODEL**

VERFAHREN UND VORRICHTUNG ZUR ERZEUGUNG VON SYNTHETISCHEN TRAININGSDATEN FÜR EIN ULTRASCHALLSENSORMODELL

PROCÉDÉ ET DISPOSITIF DE GÉNÉRATION DE DONNÉES DE FORMATION SYNTHÉTIQUE POUR UN MODÈLE DE CAPTEUR ULTRASONIQUE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**01.03.2023   Bulletin 2023/09**

(73) Proprietor: **Robert Bosch GmbH**
**70442 Stuttgart (DE)**

(72) Inventors:
• **Agarwal, Aditya Kumar**
**70327 Stuttgart (DE)**

• **Demirel, Hakan**
**75177 Pforzheim (DE)**

(56) References cited:
**US-A1- 2020 041 276**

• **FIGETAKIS EMANUEL ET AL: "UAV Path**
**Planning Using on-Board Ultrasound Transducer**
**Arrays and Edge Support", 2021 IEEE**
**INTERNATIONAL CONFERENCE ON**
**COMMUNICATIONS WORKSHOPS (ICC**
**WORKSHOPS), IEEE, 14 June 2021 (2021-06-14),**
**pages 1 - 6, XP033938842, DOI: 10.1109/**
**ICCWORKSHOPS50388.2021.9473500**

**Description**

Technical field

The present invention relates to ultrasonic sensor systems using an ultrasonic sensor model as a machine-learning model for detecting a location and properties of environmental objects during a parking maneuver. The present invention further relates to the generation of an ultrasonic sensor model based on training data, and particularly to generating synthetic training data for training such an ultrasonic sensor model.

Technical background

Ultrasonic sensor systems usually have a plurality of ultrasonic sensor devices. The ultrasonic sensor devices are configured to emit ultrasonic pulses into the surrounding environment via an emitter, wherein the ultrasonic pulses are received by a receiver after being reflected by one or more environmental objects encountered during its propagation. The received ultrasonic pulses are then analyzed to obtain information about the environmental objects.

In an ultrasonic sensor system with an arrangement of multiple ultrasonic sensor devices, measurements can be performed based on effects such as time-of-flight, amplitude attenuation, and phase shift between the transmitted and received signals or between the received signals to gain information of the environmental objects in the surrounding of the ultrasonic sensor system.

Due to various effects, and particularly for situations when a plurality of objects is present in the environment, the received signal patterns are complex and difficult to analyze applying first principle physical models. Therefore, machine-learning models can be applied to localize environmental objects and identify object properties. These ultrasonic sensor models strongly depend on the properties of the ultrasonic sensor system, and therefore for each configuration of such an ultrasonic sensor system, a different ultrasonic sensor model has to be trained.

Document E. Figetakis et al., "UAV Planning using on Board Ultrasound Transducer Arrays and Edge Support", 2021 discloses methods for eliminating the high risk of UAV collisions. A control technique is proposed on the basis of sensory measurements for adjusting the velocity and direction, therefore averting obstacle collisions. Ultrasound sensors are used to provide real-time local data. To mitigate the issue of sensors with missing data, GANs can generate synthetic values that can be used in an AI-based prediction algorithm to direct the UAV on a path. Real-time data is collected through Ultrasound sensors wherein a GAN is used to determine distribution and features of a data set, and then re-create a synthetic data set with the same features. While training the GAN creates two different types of data classes, real data and fake data. The GAN is able to increase the number of data points while keeping the same distribution.

Furthermore, document US 2020/041276 A1 discloses a method comprising: receiving an image from a camera of a vehicle; providing the image to a variational autoencoder generative adversarial network (VAE-GAN); receiving from the VAE-GAN reconstructed pose vector data and a reconstructed depth map based on the image; and calculating simultaneous localization and mapping for the vehicle based on the reconstructed pose vector data and the reconstructed depth map; wherein the VAE-GAN comprises a latent space for receiving a plurality of inputs.

Summary of the invention

According to the invention, a method for generating synthetic training data for training an ultrasonic sensor model to be applied with an ultrasonic sensor system according to claim 1 and a device for generating synthetic training data for an ultrasonic sensor model according to the further independent claim are provided.

Further embodiments are indicated in the depending subclaims.

According to a first aspect, a computer-implemented method for generating synthetic training data for training of a data-driven ultrasonic sensor model for a given configuration of an ultrasonic sensor system having multiple ultrasonic sensor devices is provided, wherein the training data includes input data representing time-series data of received ultrasonic signals and output data indicating object characteristics of environmental objects in a sensing range of the ultrasonic sensor system; comprising the steps of:

- Providing real training data obtained by a measurement of the given configuration of an ultrasonic sensor system;
- Selecting a training model from a plurality of given training models depending on one or more scoring metrics;
- Training of a data-driven generator model using the real training data;
- Using the generator model to generate the synthetic training data by applying a random noise vector as input;
- Using the synthetic training data to train the ultrasonic sensor model (43) particularly in combination with the real training data.

Furthermore, the generator model may be trained by applying as the training model a GAN model comprising the generator model and a discriminator model which are adversarially trained with the real training data, and/or by applying as the training model a Variational Autoencoder trained with the real training data wherein a decoder portion of the Variational Autoencoder forms the generator model. Particularly, the training model for obtaining the generator model is selected from a plurality of given training models depending on one or more scoring metrics, particularly an average scoring metrics of multiple scoring metrics.

A configuration of an ultrasonic sensor system having a specific arrangement of ultrasonic sensor devices needs a specific ultrasonic sensor model for evaluating measurement data and determining locations and properties of environmental objects based on the performed measurement. The specific ultrasonic sensor model needs to be complex to consider signal distortions and reflections particularly when multiple environmental objects are present in the detection range.

Therefore, it has shown to be advantageous to use a machine-learning model as an ultrasonic sensor model which provides locations and properties of environmental objects based on input data derived from the ultrasonic sensor devices.

A machine-learning model has to be trained by characteristic training data which associates an input derived from the received sensor signals to an output indicating characteristics of the environmental objects such as their locations and/or their properties. Usually, for generating training data for training such an ultrasonic sensor model based on a machine learning model, different setups of environmental objects in a surrounding environment have to be arranged and measured. By sampling the time series of the received ultrasonic signals from the different ultrasonic sensor devices and associating them to object characteristics of the arranged environmental objects training data can be generated.

The input data for the machine-learning model may be in a tabular format wherein the input features and corresponding label outputs are formatted as columns.

The input training data may have various formats including time series data of each ultrasonic sensor device, aggregated data obtained from feature engineering, such as the maximum amplitude of a time series signal, the time between the transmission of the ultrasonic signal and the time of receiving the maximum amplitude of the ultrasonic signal in the receiver, phase information of phase shifts between sent and received signals and/or between received signals, and the like. Furthermore, the training data may further include the output data (labels) including the object characteristics information which may include at least one of object location(s), object height(s), object identification(s), and the like.

The input data derived from the received ultrasonic sensor signals and the output data representing object information as label commonly form a training data item for a single specific environment setup. To obtain a significant and sufficient amount of training data items, quite a number of different setups of environmental objects would have to be built and measured which is time-consuming. Particularly, in a development stage of the ultrasonic sensor system where the configuration of the sensor system with respect to the arrangement, sensitivity, and the number of ultrasonic sensor devices have to be made, the development process is quite cost-intensive. The above method, therefore, relates to the generation of synthetic training data, thereby avoiding providing numerous environmental setups of environmental objects for real measurements.

Although the format of data is irrelevant as the concept of synthetic data generation can be applied to both unstructured data and structured data , it is preferred to use input data in a tabular format.

Basically, a generator model shall be used to generate synthetic training data. However, establishing such a generator model involves selecting from a broad variety of sets of hyperparameters defining the architecture of the generator model and the training model which strongly affect the quality of training data generated by the generator model.

According to the above method, a training model setup is used to establish and train a generator model for generating synthetic training data. The training model may include e.g. a GAN model and a Variational Autoencoder. A GAN model as a training model generally includes a generator model and a discriminator model which are adversarially trained. However, the degrees of freedom to provide a trained generator model is high as the hyperparameters defining the architecture of the data-driven generator model, the hyperparameters of a discriminator model, and the type of the training method have an impact on the quality of the generator model in terms of generating valuable training data. Therefore, the training of the generator model may be performed for different GAN models and/or a Variational Autoencoder.

After training, the trained GAN model is evaluated based on a scoring metrics to assess the quality of the training data which may be generated by the trained generator model.

Particularly, different training models for the generator model may be evaluated which may include at least one of a variational autoencoder, a conditional GAN (cGAN) and a copulaGAN, particularly if input data in a tabular format are used a Tabular Variational Autoencoder (TVAE), a Conditional Tabular GAN (CTGAN) and a CopulaGAN.

The (tabular) variational autoencoder is adapted to model real world data in tabular format by using a convolutional neural network and to learn the marginal distribution of each column by minimizing the Kullback-Leibler divergence (KL divergence). The KL divergence determines for two given distributions how close is one distribution when compared to the other distribution.

The (tabular) variational autoencoder uses an encoder to map real training data into a latent space, wherein the latent space representation is defined by a Gaussian distribution with a mean and a variance. The mean and the variance are then used for the generation of synthetic data to be evaluated by a discriminator model.

The Conditional (Tabular) GAN (CTGAN) involves that the generator generates synthetic data based on an output score which is the measure indicating the criticality to differentiate between the real training data and the generated synthetic training data. The output score is then used to tune the parameters of the generator model that it produces high-quality synthetic training data with the help of some random noise vector to induce fidelity and diversity in the generated synthetic training data.

The CopulaGAN is an improved version of the CTGAN which uses a cumulative distribution function based on a transformation using Gaussian copulas instead of variational Gaussian mixture model to make the learning of the real data easier.

Particularly, the different types of training models lead to different training qualities of the generator model, each of which is more or less suitable for the synthetic training data generation.

For the evaluation of the training model architecture, the training models are evaluated based on how closely they can generate the synthetic training data to match the real training data joined distribution. The quality of the generated training data can be checked by different methods and one or more different scoring metrics which allow to determine a training model score.

For instance, statistical metrics can be applied wherein the real training data and the synthetic training data are compared elementwise, wherein the difference between the element values are aggregated denoting a measure of similarity between each of the real training data and the synthetic training data.

Based on the one or more scoring metrics, a selection is made for the training model and the so trained generator model. The selected generator model can then be used for generating synthetic training data to train the data-driven ultrasonic sensor model.

According to a further aspect, a device for generating synthetic training data for training of a data-driven ultrasonic sensor model for a given configuration of an ultrasonic sensor system having multiple ultrasonic sensor devices, wherein the training data includes input data representing time-series data of received ultrasonic signals and output data indicating object characteristics of environmental objects in a sensing range of the ultrasonic sensor system; wherein the device is configured to:

- Provide real training data obtained by a measurement of the given configuration of an ultrasonic sensor system;
- Select a training model from a plurality of given training models depending on one or more scoring metrics;
- Train a generator model by means of the selected training model using the real training data;
- Use the generator model to generate the synthetic training data by applying a random noise vector as input;
- Use the synthetic training data to train the ultrasonic sensor model (43) particularly in combination with the real training data.

Brief description of the drawings

Embodiments of the present invention are described in more detail in conjunction with the accompanying drawings in which:

Figure 1 schematically shows an ultrasonic sensor system for detecting characteristics of environmental objects;

Figure 2 a block diagram for signal processing of the ultrasonic sensor system to obtain object characteristics of environmental objects;

Figure 3 a schematic function diagram of a GAN model used for training the generator model to be used for training the ultrasonic sensor model;

Figure 4 a flowchart illustrating a method for training an ultrasonic sensor model to be used in the ultrasonic sensor system of Fig. 1 and 2; and

Figure 5 a table comparing the scoring metrics for different training models.

Detailed description of embodiments

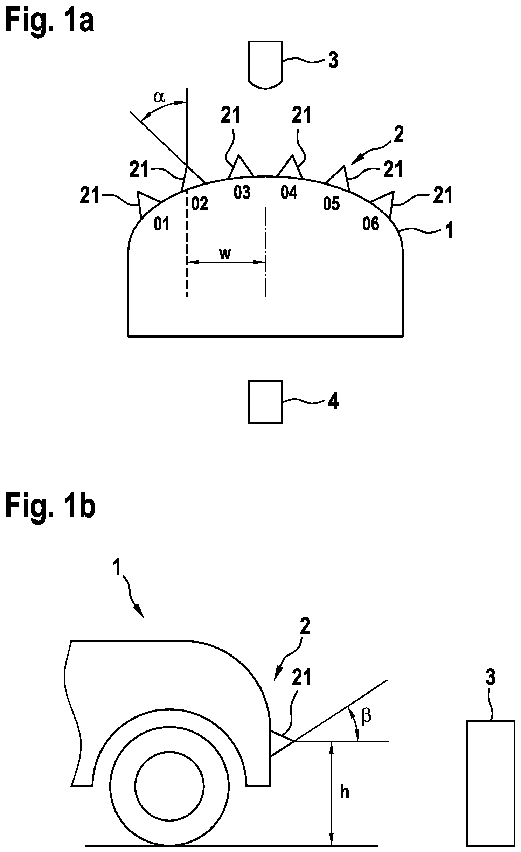

Figs. 1a and 1b schematically show a top view at a front of a vehicle 1 and a side view onto the front of the vehicle 1. The front of the vehicle 1, particularly on a bumper, is provided with an ultrasonic sensor system 2 for determining one or more environmental objects 3 in the surrounding of the vehicle 1. The ultrasonic sensor system 2 comprises a number of ultrasonic sensor devices 21 arranged along a front side of the vehicle 1. The ultrasonic sensor devices 21 are usually implemented as ultrasonic transceivers configured to emit and receive ultrasonic signals.

The configuration of the ultrasonic sensor devices 21 in the ultrasonic sensor system 2 may be subject of development and design of suitable architectures for such ultrasonic sensor systems 2. Particularly, for arranging each of the ultrasonic sensor devices 21 their locations in terms of their heights h and widths w as well as their direction of their main axis of sensing according to angles $\alpha$, $\beta$ as shown may be variable and selected.

Each of the ultrasonic sensor devices 21 is coupled with a control unit 4 providing sensor data depending on the presence of one or more environmental objects 3.

The measurement of the ultrasonic sensor devices 21 usually utilizes a time-of-flight measurement, amplitude attenuation measurement and phase shift measurements or a combination thereof.

These measurements can be made by emitting an ultrasonic pulse and receive reflected ultrasonic signals in each of the ultrasonic sensor devices 21. The received reflected ultrasonic signals are sampled into time-series data of the respective reflected ultrasonic signal. In the control unit 4, the time series data is analyzed to obtain information about environmental objects 3. As a result, the environmental objects 3 are identified by object characteristics which may include information about localization, identification and properties of the one or more environmental objects. The localization may represent local coordinates in the sensing range of the ultrasonic sensor system 2, the identification may classify the detected environmental object, such as being a low or high wall, a pedestrian, a low object or the like. Further, properties may indicate the type of material the surface of the environmental object 3 is made of.

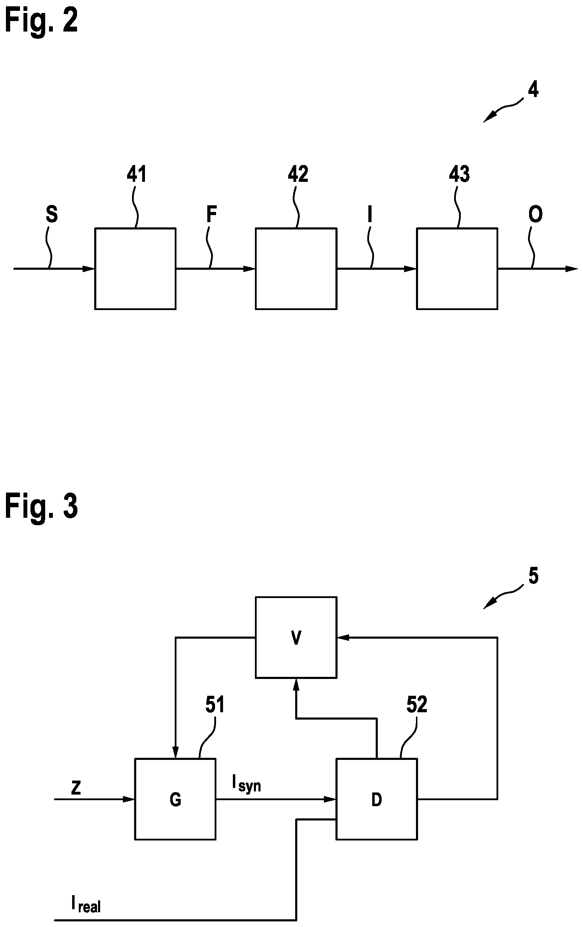

As shown in the more detailed schematic view of the control unit of Fig. 2, the sampled time series data S received by the ultrasonic sensor devices 21 are collected where they are filtered in a filter unit 41 to eliminate environmental influences, like temperature, or other random factors such as ground reflections or the like.

In a subsequent feature engineering unit 42, the filtered time series data items F are analyzed and associated with features of the received time series to generate a feature vector as the input data I for a data-driven ultrasonic sensor model 43.

The constructed features may include features for each of the filtered time series data, such as number of maxima in the time series data, time to first maximum of the amplitude, width of the maximum of the ultrasonic signal, correlation between the emitted and received signals, signal to noise ratio, confidence level of the detection of object, distance of the object from the vehicle, and the like.

The ultrasonic sensor model 43 is designed as a data-driven machine learning model, such as an artificial neural network, gradient boosting model (XGBoost) or the like. The ultrasonic sensor model 43 is trained to associate object characteristics based on the input vector I formed by the features of the received ultrasonic sensor signals. The object characteristics may be output as output data O which may include at least one of object localization data, object identification data, and object property data to identify the type of object.

For training the data-driven ultrasonic sensor model 43, training data is needed. Conventionally, training data can be obtained by setting up the environment of the ultrasonic sensor system 1 with different arrangements of environmental objects and performing a measurement to obtain the ultrasonic sensor signals which are sampled, filtered, and feature-engineered to obtain input data as described above. These input data is associated with known object characteristics (location, identification, properties) of the setup environmental objects 3 as labels where the object characteristics are manually obtained from the setup of the testing environment. Each training data item is formed by the input data and the associated output data. This process is time-consuming, as for each training data item the setup has to be changed before a new set of training data can be obtained and also setting up of the experiment for correct data collection is subjected to the special human skills.

To facilitate the process of providing training data for the ultrasonic sensor model, a generator model shall be provided for generating synthetic training data items.

For training and obtaining the generator model a GAN model may be applied (generative adversarial network) which is trained based on a low number of real training data $I_{real}$ to obtain a training data set with synthetic training data. The real training data $I_{real}$ is obtained as described above with measurements in real world setups of environmental objects 3 in a sensing range of the ultrasonic sensor system 2.

A GAN model is generally known in the art and schematically shown in Figure 3. The GAN model 5 provides a generator model 51 to generate synthetic training data based on a random noise vector z, and a discriminator model 52 which is trained to distinguish between real training data and synthetic training data $I_{syn}$. While the generator model 51 is trained to provide synthetic training data $I_{syn}$ to be as indistinguishable as possible with respect to the real training data $I_{real}$, the discriminator model 52 tries to improve distinguishing between the synthetic training data $I_{syn}$ and the real training data $I_{real}$.

Characteristics for the GAN model is the min/max optimization problem as given by the equation

$$\min_G \max_D V(D, G) = \mathbb{E}_{x \sim p_{data}(x)}[log D(x)] + \mathbb{E}_{z \sim p_z(z)}[log(1 - D(G(z)))]$$

wherein G is a transfer function of the generator model 51, wherein D is a transfer function of a discriminator model 52, D(x) the probability that x is taken from real training data $I_{real}$ rather than generated by the generator model 51, V(D, G) the value function for the min/max optimization which depends on the output of the discriminator model 52 and $p_G$ the generator's probability distribution over the real training data x. The probability distribution $p_G$ over the real training data is obtained by the successive generator loss over the iterations. The generator loss is used as a measure by the transfer function G of the generator model to adapt a probability distribution that is closer to the real data distribution and $p_Z$ the probability distribution of the input noise vector. Usually, the random noise vector is totally random in its nature which can follow uniform distribution (U(-1,1)) or normal distribution (N(0,1)) .

While the GAN model 5 as a training model has a generator model 51 and a discriminator model 52 to apply the above-described training scheme, there are different training and configuration types of GAN models based on different principles.

For instance, the generator model 51 obtained by the training model can comprise a tabular variational autoencoder, as a conditional tabular GAN model, a copulaGAN model or the like.

A tabular variational autoencoder may also be applied for obtaining a generator model so that it is adapted to model the synthetic training data, e.g. by using a convolutional neural network, to learn the marginal distribution of each input vector element by minimizing the Kullback-Leibler divergence. The KL divergence for two given distributions refer how close this one distribution when compared to the other distribution.

The variational autoencoder will be trained by the real training data. The latent space vector is given by mean values and their distributions so that random variables can as used to generate the synthetic training data.

As the GAN model also a conditional tabular GAN model can be used when the real training data is given as tabular data. The conditional tabular GAN model is characterized by a generator model which is trained to consider the output score of the discriminator model. Thereby, a particular part in the training data is used guide the generator model to generate data based on the output score. The output score is the measure on the continuous scale in [0, ∞] where 0 corresponds to an exact representation of the conditional class real data. A higher score indicates that the discriminator model 52 is able to differentiate between the real training data and the synthetic training data, and, on the other hand, a lower score indicates that the discriminator model 52 is unable to differentiate between the two. Hence, the output score is used to tune the parameters of the generator model 51 that it produces high-quality synthetic data with the help of some random noise vector (z) to induce fidelity and diversity in the generated synthetic data.

The CopulaGAN model is an improved version of conditional GAN model that uses a Cumulative Distribution Function based transformation using Gaussian Copulas instead of Variational Gaussian Mixture Model to make the learning of the real training data easier.

Other GAN models can be considered as well in the following description of the method to provide an appropriate generator model for a specific configuration of an ultrasonic sensor system.

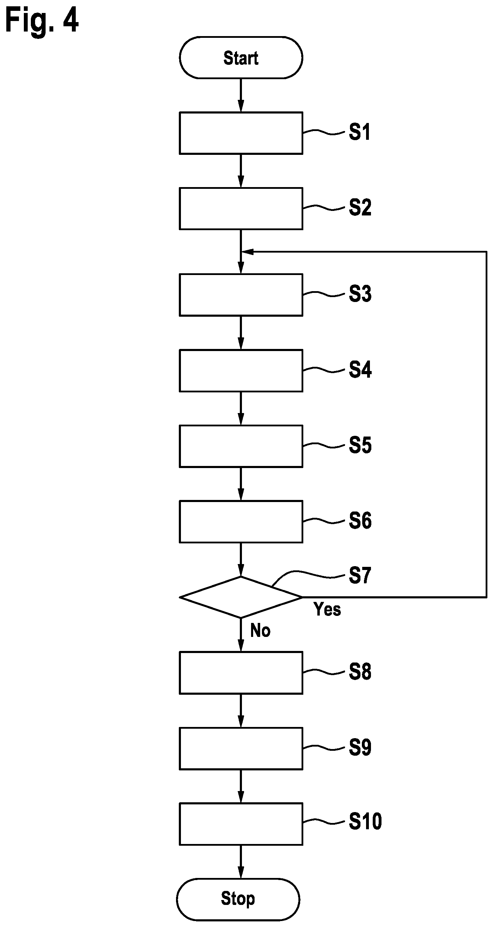

In Figure 4 a flowchart is shown illustrating the method for training a data-driven ultrasonic sensor model to be applied with the specific configuration of an ultrasonic sensor system.

In step S1 the specific configuration of an ultrasonic sensor system with an arrangement of ultrasonic sensor devices is provided.

In step S2, real training data for the selected configuration of the ultrasonic sensor system is obtained or provided as described above.

In step S3, one of a plurality of training models is selected from e.g. the above briefly discussed training model architectures. The training models can be distinguished by their type (as discussed above) and by their hyperparameters which may include the type and configurations of the neural networks involved such as number of layers, number of neurons per layer, kind of activation function and the like.

In step S4, the training of the training model using the selected training model architecture is performed as generally known in the art. The training is performed until a given convergence criteria is met or the pre-defined number of iterations as one of the training parameters end.

In step S5, the performance of the trained generator model obtained by the selected training model is evaluated using one or more scoring metrices which may include statistical metrices, detection metrics, and likelihood metrics, to check the quality of the generator model for generating synthetic training data so as to decide on the quality of the training model which the generation of the generator model 51 is based on.

As a statistical metrics as the scoring metrics a score of the similarity between the distributions of the real training data and the synthetic training data is made. This can be made using a Kolmogorov-Smirnov test (KStest) wherein the distance between the empirical distribution functions is quantified. It is based on the null hypothesis that the two samples are drawn from the same continuous distribution and an alternate hypothesis that the two samples are drawn from two different distributions with 95% critical value. In this framework, 0 and 1 are the statistical minima and maxima of the average score across all the corresponding features in the real and synthetic data respectively. The higher the score, the higher is the quality of the generated synthetic data.

Furthermore, a Kullback-Leibler Divergence (KLDivergence) may be used which indicates how closely two given probability distributions are related. Also here, 0 represents the statistical minimum and 1 represents the statistical maximum of the average scores across all the corresponding features in the real and synthetic data. A higher score represents that the two given samples are closely related.

As a detection metrics as the scoring metrics, a pre-trained machine learning model can be applied as a classifier is used to distinguish between real training data and synthetic training data. The scoring metrics evaluates how hard it is to distinguish the synthetic data from the real data by using the generator model obtained by the selected training model. To do this, the scoring metrics will shuffle the real data and synthetic data together with flags indicating whether the data is real or synthetic, and then cross validate a Machine Learning model that tries to predict this flag. The output of the scoring metrics will be the 1 minus the average ROC AUC score across all the cross validation splits. This predicting Machine Learning model may be pre-trained with tabular data and hence, accepts two parameters i.e. real data and synthetic data) A higher score from these metrics indicates that the classifier is unable to classify the real training data from the synthetic training data, and therefore, both have nearly the same characteristics. For instance, a Support Vector Classifier can be used as known from PATKI, Neha ; WEDGE, Roy ; VEERAMACHANENI, Kalyan: The Synthetic Data Vault. In: 2016, IEEE International Conference on Data Science and Advanced Analytics (DSAA), 2016, S.399-410.

To determine the likelihood metrics (BNLogLikelihood) as the scoring metrics, the real training data is used to fit a probabilistic model, and, later, the likelihood of synthetic training data is drawn from this probabilistic model is computed. A Bayesian Network as a probabilistic model may be used to indicate the quality of generated synthetic data This metric fits a Bayesian Network to the real training data and then evaluates the average log likelihood of the rows from the synthetic training data on it, where the lowest possible score is $-\infty$, and the highest possible score is 0. The higher the score better is the match between the joint distributions of real and synthetic data.

The one or more scoring metrics are stored in step S6. Also, the network parameters of the trained generator models obtained by the respective training models may be stored.

In step S7, it is checked if another training model architecture has to be evaluated. If positive (alternative: Yes), back in step S3, a further training model architecture is selected and the process is continued. Otherwise (alternative: No), the process is continued in step S8.

In step S8, the training model architectures or the generator models obtained thereby are compared depending on their respective scoring metrices. A selection of one of the generator models is made according to the scoring metrices so that the training model and the applied generator model is selected which supplies the highest quality of the synthetic training data.

In step S9 the selected generator model is used to generate synthetic training data.

In step S10, the generated synthetic training data is used to train the ultrasonic sensor model according to a conventional method, such as a Gradient Boosting Algorithm i.e. XGBoost to train the machine learning model with the generated training data to be used in the ultrasonic sensor system of Figure 1.

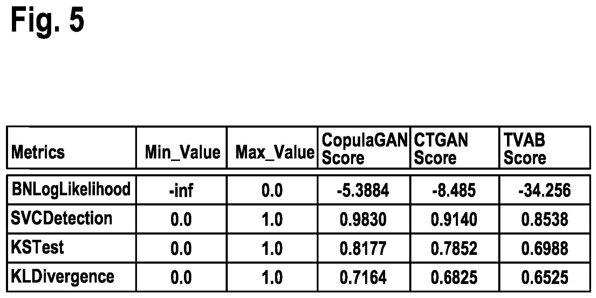

Fig. 5 shows an example of a table for the evaluation of a single ultrasonic sensor system configuration for which training data shall be modeled by using a generator model of a GAN model with four different kinds of generator models and evaluated by different evaluation metrics. It can be seen that a CopulaGAN performs best so that the CopulaGAN would be selected in this example.

**Claims**

1. Computer-implemented method for generating synthetic training data for training of a data-driven ultrasonic sensor model (43) for a given configuration of an ultrasonic sensor system (2) having multiple ultrasonic sensor devices (21), wherein the training data includes input data representing time-series data of received ultrasonic signals and output data indicating object characteristics of environmental objects in a sensing range of the ultrasonic sensor system (2); comprising the steps of:

    - Providing (S2) real training data obtained by a measurement of the given configuration of an ultrasonic sensor system (2);
    - Selecting (S3) a training model from a plurality of training models;
    - Training (S4) of a generator model by means of the selected training model using the real training data;
    - Checking (S7) if another training model architecture has to be evaluated and if positive, back in step (S3) a further training model architecture is selected and the process is continued;
    - Selecting (S8) the training model for obtaining the generator model (51) from a plurality of given training models depending on one or more scoring metrics;
    - Using (S9) the generator model (51) to generate the synthetic training data by applying a random noise vector (z) as input; and
    - Using (S10) the synthetic training data to train the ultrasonic sensor model (43) particularly in combination with the real training data.

2. Method according to claim 1, wherein the generator model (51) is trained by applying as the training model a GAN model (5) comprising the generator model (51) and a discriminator model (52) which are adversarially trained, and/or by applying as the training model a Variational Autoencoder wherein a decoder portion of the Variational Autoencoder forms the generator model.

3. Method according to claim 1 or 2, wherein the plurality of given training models include at least one of a variational autoencoder, a Conditional GAN model, and a CopulaGAN model.

4. Method according to claim 1 to 3, wherein the one or more scoring metrics include at least one of: a statistical metric, a detection metric, and a likelihood metric.

5. Method according to claim 4, wherein the ultrasonic sensor model (43) is formed as an artificial neural network or a gradient boosting model.

6. Method according to any of the claims 1 to 5, wherein training data is given as tabular data.

7. Device for generating synthetic training data for training of a data-driven ultrasonic sensor model (43) for a given configuration of an ultrasonic sensor system (2) having multiple ultrasonic sensor devices (21), wherein the training data includes input data representing time-series data of received ultrasonic signals and output data indicating object characteristics of environmental objects in a sensing range of the ultrasonic sensor system (2); wherein the device is configured to:

   - Provide real training data obtained by a measurement of the given configuration of an ultrasonic sensor system (2);
   - Select a training model from a plurality of training models;
   - Train of a generator model by means of the selected training model using the real training data;
   - Check if another training model architecture has to be evaluated and if positive, select a further training model architecture;
   - Select the training model for obtaining the generator model (51) from a plurality of given training models depending on one or more scoring metrics;
   - Use the generator model (51) to generate the synthetic training data by applying a random noise vector (z) as input, and
   - Use the synthetic training data to train the ultrasonic sensor model (43) particularly in combination with the real training data.

8. A computer program product comprising a computer readable medium, having thereon computer program code means, when said program is loaded, to make the computer execute procedures to perform all steps of the method according to any of the claims 1 to 6.

9. A machine readable medium, having a program recorded thereon, where the program is to make the computer execute a method according to any of the claims 1 to 6.

**Patentansprüche**

1. Computer-implementiertes Verfahren zum Erzeugen synthetischer Trainingsdaten zum Trainieren eines datengesteuerten Ultraschallsensormodells (43) für eine gegebene Konfiguration eines Ultraschallsensorsystems (2) mit mehreren Ultraschallsensorvorrichtungen (21), wobei die Trainingsdaten Eingabedaten, die Zeitreihendaten empfangener Ultraschallsignale repräsentieren, und Ausgabedaten, die Objektcharakteristiken von Umgebungsobjekten in einem Erfassungsbereich des Ultraschallsensorsystems (2) angeben, einschließen; umfassend die folgenden Schritte:

   - Bereitstellen (S2) von realen Trainingsdaten, die durch eine Messung der gegebenen Konfiguration eines Ultraschallsensorsystems (2) erhalten werden;
   - Auswählen (S3) eines Trainingsmodells aus einer Mehrzahl von Trainingsmodellen;
   - Trainieren (S4) eines Generatormodells mittels des ausgewählten Trainingsmodells unter Verwendung der realen Trainingsdaten;

- Prüfen (S7), ob eine andere Trainingsmodellarchitektur evaluiert werden muss, und wenn positiv, wird in Schritt (S3) eine weitere Trainingsmodellarchitektur ausgewählt und der Prozess fortgesetzt;
- Auswählen (S8) des Trainingsmodells zum Erhalten des Generatormodells (51) aus der Mehrzahl gegebener Trainingsmodelle in Abhängigkeit von einer oder mehreren Bewertungsmetriken;
- Verwenden (S9) des Generatormodells (51), um die synthetischen Trainingsdaten durch Anwenden eines Zufallsrauschvektors (z) als Eingabe zu erzeugen; und
- Verwenden (S10) der synthetischen Trainingsdaten, um das Ultraschallsensormodell (43) insbesondere in Kombination mit den realen Trainingsdaten zu trainieren.

2. Verfahren nach Anspruch 1, wobei das Generatormodell (51) durch Anwenden, als das Trainingsmodell, eines GAN-Modells (5) trainiert wird, das das Generatormodell (51) und ein Diskriminatormodell (52) umfasst, die adversarisch trainiert werden, und/oder durch Anwenden, als das Trainingsmodell, eines Variational Autoencoder, wobei ein Decoder-Abschnitt des Variational Autoencoder das Generatormodell bildet.

3. Verfahren nach Anspruch 1 oder 2, wobei die Mehrzahl gegebener Trainingsmodelle mindestens eines von einem Variational Autoencoder, einem Conditional GAN-Modell und einem CopulaGAN-Modell einschließt.

4. Verfahren nach Anspruch 1 bis 3, wobei die eine oder die mehreren Bewertungsmetriken mindestens eines von Folgendem einschließen: eine statistische Metrik, eine Detektionsmetrik und eine Likelihood-Metrik.

5. Verfahren nach Anspruch 4, wobei das Ultraschallsensormodell (43) als ein künstliches neuronales Netzwerk oder ein Gradientenverstärkungsmodell ausgebildet ist.

6. Verfahren nach einem der Ansprüche 1 bis 5, wobei Trainingsdaten als tabellarische Daten gegeben sind.

7. Vorrichtung zum Erzeugen synthetischer Trainingsdaten zum Trainieren eines datengesteuerten Ultraschallsensormodells (43) für eine gegebene Konfiguration eines Ultraschallsensorsystems (2) mit mehreren Ultraschallsensorvorrichtungen (21), wobei die Trainingsdaten Eingabedaten, die Zeitreihendaten empfangener Ultraschallsignale repräsentieren, und Ausgabedaten, die Objektcharakteristiken von Umgebungsobjekten in einem Erfassungsbereich des Ultraschallsensorsystems (2) angeben, einschließen; wobei die Vorrichtung ausgelegt ist zum:

- Bereitstellen von realen Trainingsdaten, die durch eine Messung der gegebenen Konfiguration eines Ultraschallsensorsystems (2) erhalten werden;
- Auswählen eines Trainingsmodells aus einer Mehrzahl von Trainingsmodellen;
- Trainieren eines Generatormodells mittels des ausgewählten Trainingsmodells unter Verwendung der realen Trainingsdaten;
- Prüfen, ob eine andere Trainingsmodellarchitektur evaluiert werden muss, und wenn positiv, Auswählen einer weiteren Trainingsmodellarchitektur;
- Auswählen des Trainingsmodells zum Erhalten des Generatormodells (51) aus der Mehrzahl gegebener Trainingsmodelle in Abhängigkeit von einer oder mehreren Bewertungsmetriken;
- Verwenden des Generatormodells (51), um die synthetischen Trainingsdaten durch Anwenden eines Zufallsrauschvektors (z) als Eingabe zu erzeugen, und
- Verwenden der synthetischen Trainingsdaten, um das Ultraschallsensormodell (43) insbesondere in Kombination mit den realen Trainingsdaten zu trainieren.

8. Computerprogrammprodukt, das ein computerlesbares Medium mit Computerprogrammcodemitteln umfasst, das, wenn das Programm geladen wird, den Computer veranlasst, Prozeduren zum Durchführen aller Schritte des Verfahrens nach einem der Ansprüche 1 bis 6 auszuführen.

9. Maschinenlesbares Medium mit einem darauf aufgezeichneten Programm, wobei das Programm veranlassen soll, dass der Computer ein Verfahren nach einem der Ansprüche 1 bis 6 ausführt.

**Revendications**

1. Procédé mis en œuvre par ordinateur permettant de générer des données de formation synthétiques pour former un modèle de capteur ultrasonore piloté par des données (43) pour une configuration donnée d'un système de capteur ultrasonore (2) comportant plusieurs dispositifs de capteur ultrasonore (21), les données de formation comprenant des données d'entrée représentant des données chronologiques de signaux ultrasonores reçus et des données de sortie indiquant des caractéristiques d'objet d'objets environnementaux dans une plage de détection du système de capteur ultrasonore (2) ; le procédé comprenant les étapes suivantes :

- fournir (S2) des données de formation réelles obtenues par une mesure de la configuration donnée d'un système de capteur ultrasonore (2) ;
- sélectionner (S3) un modèle de formation parmi plusieurs modèles de formation ;
- former (S4) un modèle générateur au moyen du modèle de formation sélectionné utilisant les données de formation réelles ;
- vérifier (S7) si une autre architecture de modèle de formation doit être évaluée et, si tel est le cas, à l'étape (S3), sélectionner une architecture de modèle de formation complémentaire et poursuivre le processus ;
- sélectionner (S8) le modèle de formation pour obtenir le modèle de générateur (51) parmi une pluralité de modèles de formation donnés en fonction d'une ou plusieurs métriques de score ;
- utiliser (S9) le modèle générateur (51) pour générer les données de formation synthétiques en appliquant en entrée un vecteur de bruit aléatoire (z) ; et
- utiliser (S10) les données de formation synthétiques pour entraîner le modèle de capteur ultrasonique (43) en particulier en combinaison avec les données réelles de formation.

2.  Procédé selon la revendication 1, dans lequel le modèle générateur (51) est entraîné en appliquant comme modèle de formation un modèle GAN (5) comprenant le modèle générateur (51) et un modèle discriminateur (52) qui sont entraînés de manière antagoniste, et/ou en appliquant comme modèle de formation un autocodeur variationnel dans lequel une partie décodeur de l'autocodeur variationnel forme le modèle générateur.

3.  Procédé selon la revendication 1 ou la revendication 2, dans lequel la pluralité de modèles de formation donnés comprend au moins l'un d'un autocodeur variationnel, d'un modèle GAN conditionnel et d'un modèle CopulaGAN.

4.  Procédé selon les revendications 1 à 3, dans lequel les une ou plusieurs métriques de score comprennent au moins l'une parmi : une métrique statistique, une métrique de détection et une métrique de vraisemblance.

5.  Procédé selon la revendication 4, dans lequel le modèle de capteur ultrasonore (43) est réalisé sous la forme d'un réseau neuronal artificiel ou d'un modèle d'amplification de gradient.

6.  Procédé selon l'une quelconque des revendications 1 à 5, dans lequel des données de formation sont données sous forme de données tabulaires.

7.  Dispositif permettant de générer des données de formation synthétiques pour former un modèle de capteur ultrasonore piloté par des données (43) pour une configuration donnée d'un système de capteur ultrasonore (2) comportant plusieurs dispositifs de capteur ultrasonore (21), les données de formation comprenant des données d'entrée représentant des données chronologiques de signaux ultrasonores reçus et des données de sortie indiquant des caractéristiques d'objet d'objets environnementaux dans une plage de détection du système de capteur ultrasonore (2) ; le dispositif étant configuré pour :

- fournir des données de formation réelles obtenues par une mesure de la configuration donnée d'un système de capteur ultrasonore (2) ;
- sélectionner un modèle de formation parmi plusieurs modèles de formation ;
- former un modèle générateur au moyen du modèle de formation sélectionné utilisant les données de formation réelles ;
- vérifier si une autre architecture de modèle de formation doit être évaluée et, si tel est le cas, sélectionner une architecture de modèle de formation complémentaire ;
- sélectionner le modèle de formation pour obtenir le modèle générateur (51) parmi une pluralité de modèles de formation donnés en fonction d'une ou plusieurs métriques de score ;
- utiliser le modèle générateur (51) pour générer les données de formation synthétiques en appliquant en entrée un vecteur de bruit aléatoire (z), et
- utiliser les données synthétiques de formation pour entraîner le modèle de capteur ultrasonique (43) en particulier en combinaison avec les données réelles de formation.

8.  Produit programme informatique comprenant un support lisible par ordinateur, sur lequel sont stockés des moyens de codage informatique qui, lorsque le programme est chargé, amènent l'ordinateur à exécuter des procédures pour exécuter toutes les étapes du procédé selon l'une quelconque des revendications 1 à 6.

9. Support lisible par machine, sur lequel est enregistré un programme, le programme étant destiné à amener l'ordinateur à exécuter un procédé selon l'une quelconque des revendications 1 à 6.

## Fig. 1a

## Fig. 1b

**Fig. 2**

**Fig. 3**

# Fig. 4

# Fig. 5

| Metrics | Min_Value | Max_Value | CopulaGAN Score | CTGAN Score | TVAB Score |
|---|---|---|---|---|---|
| BNLogLikelihood | -inf | 0.0 | -5.3884 | -8.485 | -34.256 |
| SVCDetection | 0.0 | 1.0 | 0.9830 | 0.9140 | 0.8538 |
| KSTest | 0.0 | 1.0 | 0.8177 | 0.7852 | 0.6988 |
| KLDivergence | 0.0 | 1.0 | 0.7164 | 0.6825 | 0.6525 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020041276 A1

**Non-patent literature cited in the description**

- **E. FIGETAKIS et al.** *UAV Planning using on Board Ultrasound Transducer Arrays and Edge Support*, 2021

- **PATKI, NEHA** ; **WEDGE, ROY** ; **VEERAMACHA-NENI, KALYAN**. *The Synthetic Data Vault. In: 2016, IEEE International Conference on Data Science and Advanced Analytics (DSAA)*, 2016, 399-410